# EUROPEAN PATENT SPECIFICATION

(11) **EP 2 985 544 B1**
(45) Date of publication and mention of the grant of the patent: **19.02.2020**
(21) Application number: 15180632.0
(22) Date of filing: 11.08.2015
(51) Int. Cl.: F24F 11/30, F24F 110/00, F24F 140/30, F24F 11/89, F24F 13/22

(54) **METHOD OF CONTROLLING AIR CONDITIONER AND AIR CONDITIONER CONTROLLED THEREBY**
VERFAHREN ZUR STEUERUNG EINER KLIMAANLAGE UND DADURCH GESTEUERTE KLIMAANLAGE
PROCÉDÉ DE COMMANDE DE CONDITIONNEUR D'AIR ET CONDITIONNEUR D'AIR COMMANDÉ PAR CE DERNIER

(30) Priority: 12.08.2014 KR 20140104193
(43) Date of publication of application: 17.02.2016
(73) Proprietor: LG Electronics Inc., Yeongdeungpo-gu Seoul 150-721 (KR)
(72) Inventor: KIM, Daehee, 153-802 Seoul (KR); SONG, Joonkeol, 153-802 Seoul (KR); KIM, Sunghwan, 153-802 Seoul (KR)
(74) Representative: Vossius & Partner Patentanwälte Rechtsanwälte mbB

(56) References cited:
- EP-A1- 1 943 902
- EP-A2- 2 085 711
- US-A- 5 965 814
- US-A1- 2010 064 705

## Description

### CROSS-REFERENCE TO RELATED APPLICATION

This application claims the priority benefit of Korean Patent Application No. 10-2014-0104193, filed on August 12, 2014 in the Korean Intellectual Property Office.

### BACKGROUND OF THE INVENTION

### 1. Field of the invention

The present invention relates to an air conditioner.

### 2. Description of the Related Art

In general, an air conditioner includes a drainage pump for discharging condensed water, generated during the operation of the air conditioner, out of the air conditioner. A water level sensing device for sensing the level of the condensed water is installed in the air conditioner.

A water level sensing device installed in a conventional air conditioner is disposed in a drainage tank for storing condensed water. As a result, the water level sensing device directly contacts the condensed water. The water level sensing device is configured such that a float moves upward or downward according to the level of the condensed water, and a magnetic sensor senses the magnetic force of the float when the float moves upward to a predetermined height or higher.

However, since the water level sensing device installed in the conventional air conditioner directly contacts the condensed water as described above, foreign matter may be attached to the float. In the water level sensing device installed in the conventional air conditioner, the float may malfunction due to the foreign matter attached to the float.

In addition, the conventional air conditioner is configured such that the magnetic sensor senses the float when the float moves upward to a predetermined height. That is, the magnetic sensor senses only that the condensed water has reached a predetermined height or higher. If the condensed water does not reach the predetermined height, therefore, it is not possible to discharge the condensed water out of the air conditioner.

An example of a conventional air conditioner is disclosed, for example, in Korean Registered Patent No. 10-1351024.

US2010/0064705 discloses an air conditioner upon which the preamble of appending claim 1 is based.

### SUMMARY OF THE INVENTION

It is an object of the present invention to provide an air conditioner that is capable of sensing the level of condensed water in a state of not contacting the condensed water.

It is another object of the present invention to provide an air conditioner that is capable of more accurately detecting the level of condensed water in order to control a drainage pump according to various purposes.

It is a further object of the present invention to provide an air conditioner that is capable of detecting the speed, flow rate, level, etc. of condensed water that is generated per unit time.

In accordance with an aspect of the present invention, the above and other objects can be accomplished by the provision of a method of controlling an air conditioner including a case having a condensed water storage part formed therein, a water level sensing housing installed in the condensed water storage part in a state of contacting condensed water stored in the condensed water storage part, and a plurality of electrode pads disposed in the water level sensing housing, in a state of not contacting the condensed water, for sensing capacitance of the condensed water, the method including sensing the capacitance of the condensed water through any one of the electrode pads to sense a level of the condensed water during cooling, and operating a drainage pump based on the level of the condensed water sensed through any one of the electrode pads to drain the condensed water stored in the condensed water storage part, and sensing the increase in the level of condensed water during a predetermined time based on the level of the condensed water sensed at the sensing step and calculating the amount of condensed water that is generated per unit time based thereupon.

The method may further include, upon determining that the level of the condensed water deviates from an error range of a drainage level, returning to the sensing step.

The method may further include determining whether an operating condition of the drainage pump is satisfied based on the amount of condensed water that is generated per unit time calculated at the calculating step, upon determining at the determining step that the operating condition of the drainage pump is satisfied, operating the drainage pump, and upon determining at the determining step that the operating condition of the drainage pump is not satisfied, returning to the sensing step of sensing the level of the condensed water.

The operating condition of the drainage pump may be decided based on a comparison between the amount of condensed water that is generated per unit time and the amount of condensed water that can be stored.

The operating condition of the drainage pump may be decided based on a comparison between the amount of condensed water that is generated per unit time and a reference value stored in a controller.

The method may further include comparing the amount of condensed water that is generated per unit time with a reference value stored in a controller, and upon determining that the amount of condensed water that is generated per unit time is greater than the reference value, decreasing an operating interval of the drainage pump.

The method may further include comparing the amount of condensed water that is generated per unit time with a reference value stored in a controller, and upon determining that the amount of condensed water that is generated per unit time is less than the reference value, increasing an operating interval of the drainage pump.

The method may further include calculating the amount of condensed water that can be stored based on the level of condensed water stored in the condensed water storage part and comparing the amount of condensed water that is generated per unit time with the amount of condensed water that can be stored, and upon determining at the comparing step that the amount of condensed water that is generated per unit time is greater than the amount of condensed water that can be stored, operating the drainage pump.

The method may further include calculating the amount of condensed water that can be stored based on the level of condensed water stored in the condensed water storage part and comparing the amount of condensed water that is generated per unit time with the amount of condensed water that can be stored, and upon determining at the comparing step that the amount of condensed water that can be stored is greater than the amount of condensed water that is generated per unit time, delaying the operation of the drainage pump.

The method may further include determining whether a dehumidification recommendation condition is satisfied based on the amount of condensed water that is generated per unit time, and upon determining that the dehumidification recommendation condition is satisfied, informing a user thereof.

The informing step may include informing the user that the dehumidification recommendation condition is satisfied through a display unit or a remote controller of an indoor unit of the air conditioner or using sound output from the indoor unit of the air conditioner.

In accordance with another aspect of the present invention, there is provided a method of controlling an air conditioner including a case having a condensed water storage part formed therein, a water level sensing housing installed in the condensed water storage part in a state of contacting condensed water stored in the condensed water storage part, and a plurality of electrode pads disposed in the water level sensing housing, in a state of not contacting the condensed water, for sensing capacitance of the condensed water, the method including sensing the capacitance of the condensed water through any one of the electrode pads to sense a level of the condensed water during cooling, sensing the increase in the level of condensed water during a predetermined time based on the level of the condensed water sensed at the sensing step and calculating the amount of condensed water that is generated per unit time based thereupon, and deciding whether the drainage pump will be operated by comparing the amount of condensed water that is generated per unit time with the amount of condensed water that can be stored and/or comparing the amount of condensed water that is generated per unit time with a reference value stored in a controller.

The method may further include, upon determining that the amount of condensed water that is generated per unit time is greater than the reference value, decreasing an operating interval of the drainage pump, and, upon determining that the amount of condensed water that is generated per unit time is less than the reference value, increasing the operating interval of the drainage pump.

The method may further include, upon determining that the amount of condensed water that is generated per unit time is greater than the amount of condensed water that can be stored, operating the drainage pump, and, upon determining that the amount of condensed water that can be stored is greater than the amount of condensed water that is generated per unit time, delaying the operation of the drainage pump.

The method may further include determining whether a dehumidification recommendation condition is satisfied based on the amount of condensed water that is generated per unit time, and upon determining that the dehumidification recommendation condition is satisfied, informing a user thereof.

In accordance with a further aspect of the present invention, there is provided an air conditioner including a case having a condensed water storage part formed therein, and a water level sensing device installed in the condensed water storage part for sensing capacitance of condensed water stored in the condensed water storage part to sense a level of the condensed water, wherein the water level sensing device includes a water level sensing housing disposed in the condensed water storage part in a state of contacting the condensed water stored in the condensed water storage part, a printed circuit board disposed in the water level sensing housing, and a plurality of electrode pads disposed on the printed circuit board, in a state of not contacting the condensed water, for sensing the capacitance of the condensed water.

The case may be provided with a partition wall, which defines the condensed water storage part, and a fixing part, fixed to the partition wall, may be disposed at the water level sensing housing.

The water level sensing device may further include a connector for electrically connecting the printed circuit board to a controller of the air conditioner.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a perspective view showing an air conditioner according to a first embodiment of the present invention;
FIG. 2 is a perspective view showing the air conditioner of FIG. 1 in which a water level detecting device is installed;
FIG. 3 is a perspective view of the water level detecting device shown in FIG. 2;
FIG. 4 is a front view of FIG. 3;
FIG. 5 is a flowchart showing a method of controlling an air conditioner according to a first embodiment of the present invention;
FIG. 6 is a flowchart showing a method of controlling an air conditioner according to a second embodiment of the present invention;
FIG. 7 is a flowchart showing a method of controlling an air conditioner according to a third embodiment of the present invention;
FIG. 8 is a flowchart showing a method of controlling an air conditioner according to a fourth embodiment of the present invention;
FIG. 9 is a flowchart showing a method of controlling an air conditioner according to a fifth embodiment of the present invention;
FIG. 10 is a flowchart showing a method of controlling an air conditioner according to a sixth embodiment of the present invention; and
FIG. 11 is a flowchart showing a method of controlling an air conditioner according to a seventh embodiment of the present invention.

### DETAILED DESCRIPTION OF THE PREFERRED EMBODIMENTS

Advantages, features and methods for achieving those of embodiments may become apparent upon referring to embodiments described later in detail together with attached drawings. However, embodiments are not limited to the embodiments disclosed hereinafter, but may be embodied in different modes. The embodiments are provided for perfection of disclosure and informing a scope to persons skilled in this field of art. The same reference numbers may refer to the same elements throughout the specification.

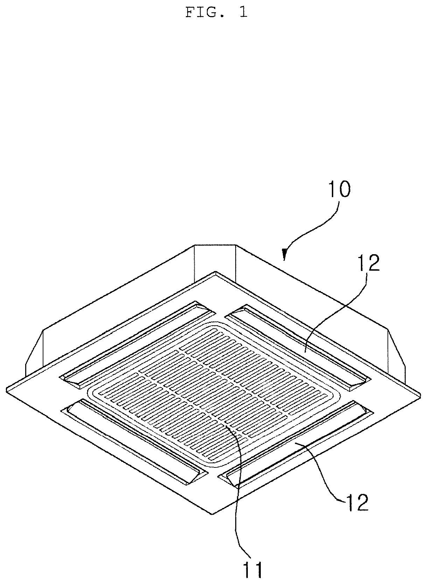

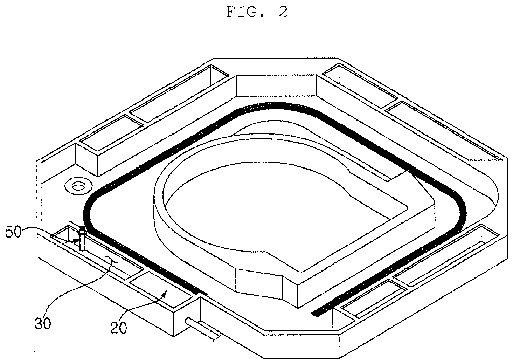

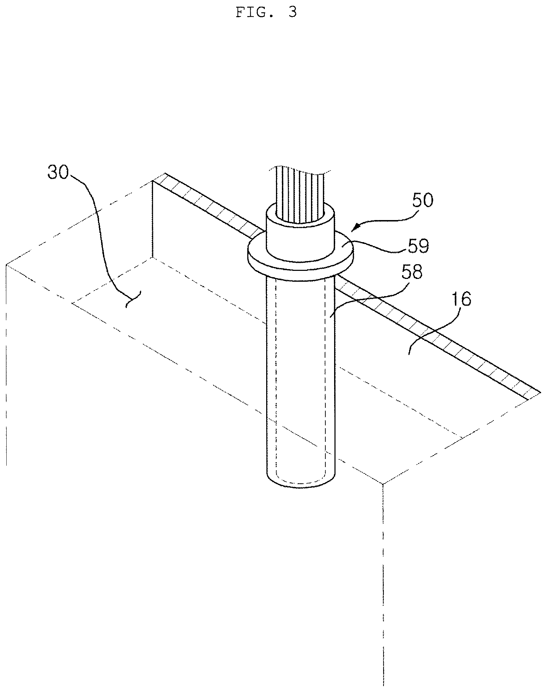

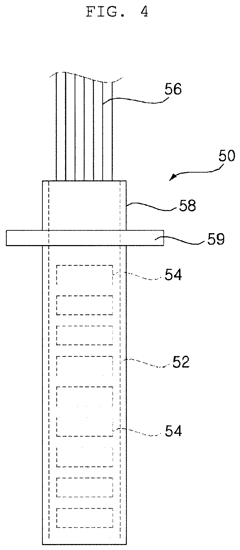

Hereinafter, an air conditioner according to a first embodiment of the present invention will be described with reference to FIGS. 1 to 4.

The air conditioner according to this embodiment is a ceiling type air conditioner. The ceiling type air conditioner includes an indoor unit and an outdoor unit.

The indoor unit may be variously configured based on where and how the air conditioner is installed.

The indoor unit according to this embodiment is buried in the ceiling of a room such that only the lower surface of the indoor unit is exposed in the room. The indoor unit includes a case 10 forming the external appearance of the indoor unit. The case 10 is provided at the lower surface thereof with an inlet port 11 and an output port 12.

An indoor heat exchanger (not shown), an indoor blower (not shown), a drainage pump 20, etc. are disposed in the case 10. A condensed water storage part 30 for storing condensed water generated by the indoor heat exchanger is formed in the case 10. In this embodiment, the condensed water storage part 30 is formed integrally with the case 10. Alternatively, the condensed water storage part 30 may be manufactured separately from the case 10.

A water level sensing device 50 for sensing the level of condensed water stored in the condensed water storage part 30 is disposed in the case 10. The water level sensing device 50 does not directly contact the condensed water. The water level sensing device 50 may be disposed outside the condensed water storage part 30 or in a frame defining the condensed water storage part 30.

In this embodiment, the water level sensing device 50 is inserted in a condensed water partition wall 16 defining the condensed water storage part 30. As a result, the water level sensing device 50 does not contact the condensed water.

In this embodiment, the water level sensing device 50 senses the level of condensed water using capacitance.

In general, when an electric potential is applied to a conductor, the conductor is charged with electric charges. This effect is more clearly observed when two or more different electric potentials are applied to two or more conductors (voltages are applied to two or more conductors) than when an electric potential is applied to a single conductor.

A capacitive sensor is a sensor that quantifies capacitance using this charging effect. In this embodiment, the capacitive sensor senses that the capacitance varies depending upon the level of condensed water stored in the condensed water storage part 30. The operating principle and construction of the capacitive sensor are well known to those skilled in the art to which the present invention pertains, and therefore a detailed description thereof will be omitted.

In this embodiment, the water level sensing device 50 is configured in the form of a printed circuit board assembly (PCBA). The water level sensing device 50 includes a water level sensing housing 58 disposed in the condensed water storage part 30, a printed circuit board 52 disposed in the water level sensing housing 58 in a state of not contacting the condensed water, a plurality of electrode pads 54 disposed on the printed circuit board 52, and a connector 56 for electrically connecting the printed circuit board 52 to a controller (not shown) of the air conditioner.

The electrode pads 54 are a sensor that senses the capacitance of the condensed water. A plurality of electrode pads 54 is disposed on the printed circuit board 52. Each of the electrode pads 54 extends in a lateral direction of the printed circuit board 52. The electrode pads 54 are disposed on the printed circuit board 52 such that the electrode pads 54 are spaced apart from each other in a vertical direction.

The water level sensing housing 58 is disposed in the condensed water storage part 30. The water level sensing housing 58 contacts condensed water. The water level sensing housing 58 prevents the condensed water from directly contacting the electrode pads 54. A packing (not shown) or a sealing (not shown) may be disposed at the water level sensing housing 58. The packing or the sealing prevents the condensed water from permeating inside and contacting the electrode pads 54.

A fixing part 59, which is configured to be fixed to the case 10, may be formed at the water level sensing housing 58. In this embodiment, the fixing part 59 is fixed to the partition wall 16, which is formed at the case 10. In this embodiment, the partition wall 16 defines the condensed water storage part 30. That is, the water level sensing housing 58 may be fixed to a structure defining the condensed water storage part 30.

The connector 56 connects the printed circuit board 52 to the controller of the air conditioner. The connector 56 transmits data regarding the condensed water sensed by the electrode pads 54 to the controller.

Hereinafter, methods of controlling the air conditioner according to this embodiment will be described in more detail with reference to the accompanying drawings.

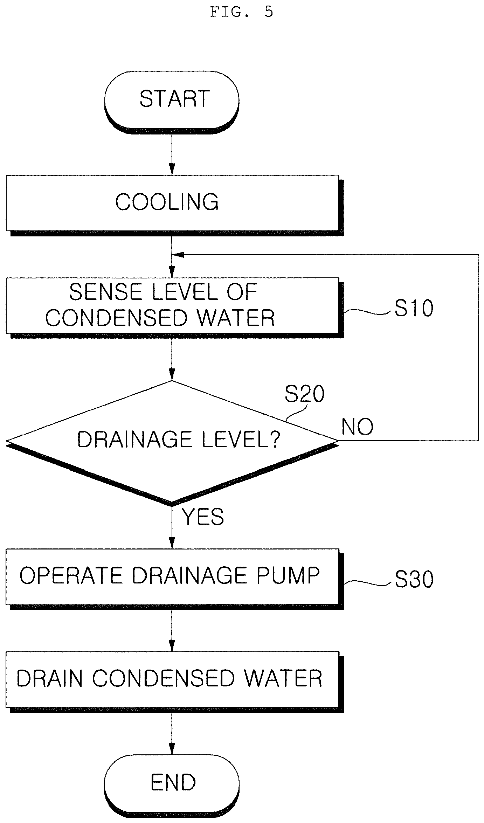

FIG. 5 is a flowchart showing a method of controlling an air conditioner according to a first embodiment of the present invention.

In the method of controlling the air conditioner according to this embodiment, the water level sensing device 50, which includes the electrode pads 54, accurately senses the level of condensed water to control the drainage pump 20.

The method of controlling the air conditioner according to this embodiment includes a step of sensing the level of condensed water stored in the condensed water storage part 30 during cooling (S10), a step of comparing the sensed level of the condensed water with a drainage level stored in a memory (S20), and a step of, upon determining that the sensed level of the condensed water is within an error range of the drainage level, operating the drainage pump 20 (S30).

Upon determining at step S20 that the sensed level of the condensed water deviates from the error range of the drainage level, the procedure returns to step S10.

In a case in which a conventional float switch is used, the drainage pump 20 is not operated even when the condensed water very closely approaches the float switch. However, in a case in which the level of the condensed water is accurately sensed using the electrode pads 54, as in this embodiment, the sensed level of the condensed water is compared with the drainage level, and the drainage pump 20 is operated based on the error range of the drainage level, even when the level of the condensed water does not reach the drainage level.

Therefore, the air conditioner according to this embodiment may use the condensed water storage part 30 more effectively.

That is, in a conventional air conditioner, the drainage pump 20 is operated based on the maximum amount of condensed water that is generated in order to prevent the overflow of condensed water. As a result, the conventional air conditioner has problems in that noise and power consumption are increased due to the operation of the drainage pump 20.

For example, in a case in which the level of condensed water is sensed every 10 minutes as in the conventional art, the condensed water storage part 30 must have a sufficient space to store condensed water for 10 minutes. That is, in the conventional air conditioner, the condensed water storage part 30 must have an empty space equivalent to the maximum amount of condensed water that can be generated for 10 minutes. In the conventional air conditioner, therefore, the float switch senses the level of condensed water in a state in which the condensed water storage part 30 has an empty space equivalent to the maximum amount of condensed water, and then the drainage pump is operated in order to prevent the overflow of condensed water.

However, in a case in which the level of condensed water is sensed through the sensing of capacitance using the electrode pads as in this embodiment, it is possible to control the operating interval of the drainage pump 20 based on the amount of condensed water that is currently generated.

For example, the amount of condensed water that is generated is small when humidity is low, and the amount of condensed water that is generated is large when humidity is high. In a case in which the amount of condensed water that is generated is small, therefore, the operating interval of the drainage pump 20 may be controlled to be increased. In a case in which the amount of condensed water that is generated is large, on the other hand, the operating interval of the drainage pump 20 may be controlled to be decreased. It is possible to optimize operating noise and power consumption through the control of the operating interval of the drainage pump 20.

In addition, since the water level sensing device 50 according to this embodiment senses the level of condensed water in a state of not contacting the condensed water, contact between the water level sensing device 50 and foreign matter, such as dust, floating in the condensed water is fundamentally prevented. As a result, the water level sensing device 50 does not malfunction due to foreign matter, such as dust, contained in the condensed water unlike the conventional air conditioner.

Furthermore, since the water level sensing device 50 according to this embodiment is embodied by an electric circuit, the controller may perform fault diagnosis on itself, and may easily inform a user thereof.

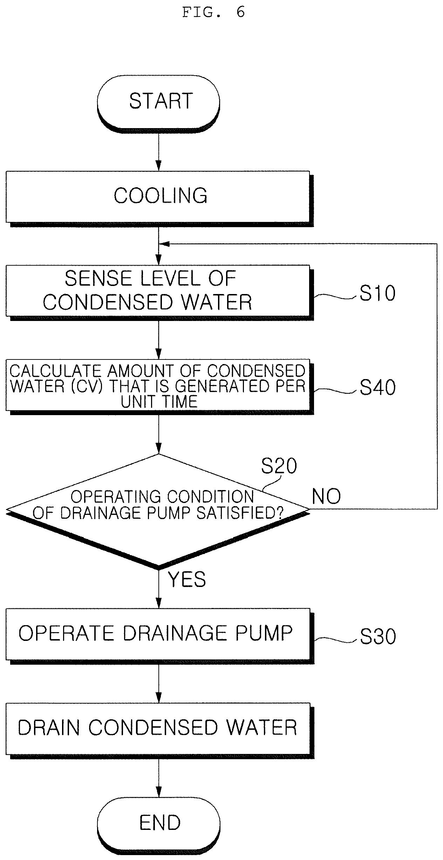

FIG. 6 is a flowchart showing a method of controlling an air conditioner according to a second embodiment of the present invention.

In the method of controlling the air conditioner according to this embodiment, the amount of condensed water that is generated per unit time is calculated, and the drainage pump 20 is controlled using the same, unlike the first embodiment.

The method of controlling the air conditioner according to this embodiment includes a step of sensing the level of condensed water stored in the condensed water storage part 30 during cooling (S10), a step of sensing the increase in the level of condensed water during a predetermined time based on the level of the condensed water sensed at step S10 and calculating the amount of condensed water (CV) that is generated per unit time based thereupon (S40), and a step of determining whether an operating condition of the drainage pump 20 is satisfied based on the amount of condensed water (CV) that is generated per unit time calculated at step S40 (S50).

Upon determining at step S50 that the operating condition of the drainage pump 20 is satisfied, the drainage pump 20 is operated (S30). Upon determining at step S50 that the operating condition of the drainage pump 20 is not satisfied, on the other hand, the procedure returns to step S10.

In this embodiment, the amount of condensed water (CV) that is generated in the condensed water storage part 30 per unit time is calculated. Alternatively, the height of condensed water that is generated per unit time or the speed of condensed water that is generated per unit time may be calculated.

The height of condensed water that is generated per unit time may be the height of condensed water that is stored in the condensed water storage part 30 until the upper one of the electrode pads 54 senses the condensed water after any one of the electrode pads 54 senses the condensed water. The distance between the respective electrode pads 54 is a constant value.

The speed of condensed water that is generated per unit time may be calculated by dividing the distance between the respective electrode pads 54 by the time taken to generate the condensed water.

It is possible to sense the flow rate, volume, speed, height, etc. of the condensed water using the time during which the condensed water is sensed by the electrode pads 54.

At step S50, the operating condition of the drainage pump may be set variously. For example, the operating condition of the drainage pump may include the flow rate, volume, speed, and height of the condensed water that is generated.

The other constructions of this embodiment are identical to those of the first embodiment, and therefore a detailed description thereof will be omitted.

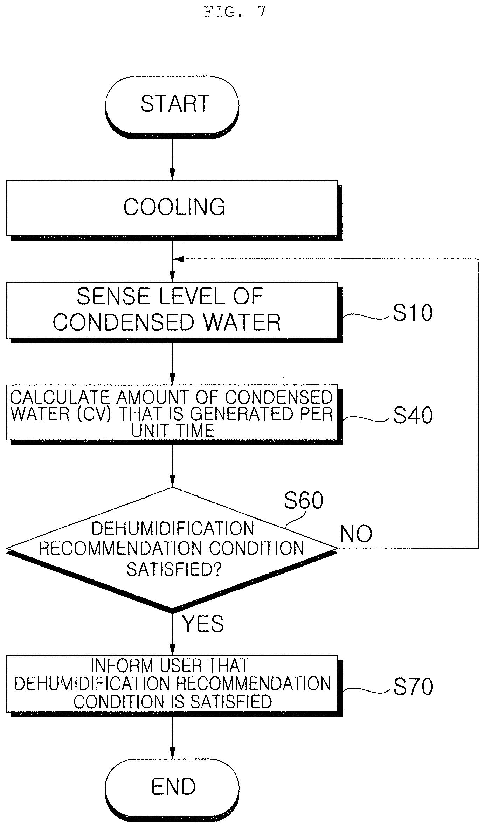

FIG. 7 is a flowchart showing a method of controlling an air conditioner according to a third embodiment of the present invention.

In the method of controlling the air conditioner according to this embodiment, a specific mode is presented to a user based on the amount of condensed water that is generated per unit time.

The method of controlling the air conditioner according to this embodiment includes a step of sensing the level of condensed water stored in the condensed water storage part 30 during cooling (S10), a step of sensing the increase in the level of condensed water during a predetermined time based on the level of the condensed water sensed at step S10 and calculating the amount of condensed water (CV) that is generated per unit time based thereupon (S40), and a step of determining whether a dehumidification recommendation condition is satisfied based on the amount of condensed water that is generated per unit time (S60).

Upon determining that the dehumidification recommendation condition is satisfied, a user is informed thereof (S70).

Upon determining that the dehumidification recommendation condition is not satisfied, on the other hand, the procedure returns to step S10.

At step S60, the amount of condensed water that is generated per unit time is compared with a reference value (SV) stored in the controller. In a case in which, at step S60, the amount of condensed water (CV) that is generated per unit time is equal to or greater than the reference value (SV), it is determined that the humidity of the room is high, and therefore condensed water is excessively generated.

Upon determining at step S60 that the dehumidification recommendation condition is satisfied, the user may be informed thereof through a display unit (not shown) or a remote controller (not shown) of the indoor unit of the air conditioner or using sound output from the indoor unit of the air conditioner at step S70.

In a case in which the dehumidification recommendation condition is satisfied, a process of comparing the room temperature with a target temperature may be further executed. In a case in which the dehumidification recommendation condition is satisfied, step S70 may be executed only when the temperature difference between the room temperature and the target temperature is within a predetermined range.

In a case in which the temperature difference between the room temperature and the target temperature is small, the user may be prompted to operate the air conditioner in a dehumidification mode instead of room cooling in order to save electricity and more effectively remove humidity from the air.

Meanwhile, the amount of condensed water (CV) that is generated per unit time and the reference value (SV) may be set variously as the flow rate, volume, speed, height, etc. of the condensed water, as described with reference to the second embodiment.

The other constructions of this embodiment are identical to those of the second embodiment, and therefore a detailed description thereof will be omitted.

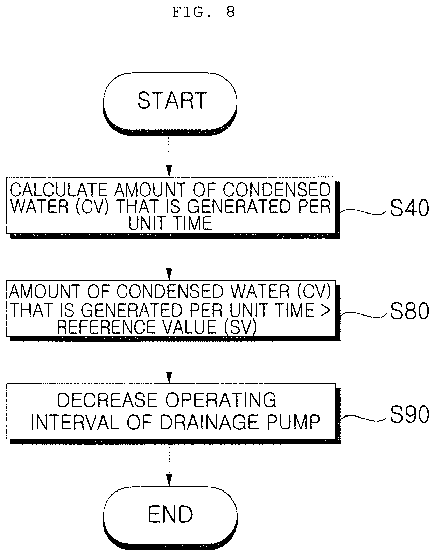

FIG. 8 is a flowchart showing a method of controlling an air conditioner according to a fourth embodiment of the present invention.

In the method of controlling the air conditioner according to this embodiment, the operating interval of the drainage pump is adjusted based on the amount of condensed water (CV) that is generated.

The method of controlling the air conditioner according to this embodiment includes a step of sensing the increase in the level of condensed water during a predetermined time and calculating the amount of condensed water (CV) that is generated per unit time based thereupon (S40), a step of comparing the amount of condensed water that is generated per unit time with a reference value (SV) (S80), and a step of, upon determining that the amount of condensed water that is generated per unit time is greater than the reference value (SV), actively decreasing the operating interval of the drainage pump 20 (S90).

In a case in which, at step S80, the amount of condensed water (CV) that is generated per unit time is greater than the reference value, it is determined that the humidity of the room air is high. Upon determining that the humidity of the room air is high, the operating interval of the drainage pump 20 may be actively decreased such that the drainage pump 20 can be operated more frequently in order to effectively discharge condensed water.

Even in a case in which it is determined at step S80 that the humidity of the room air is high, the operating interval of the drainage pump 20 may be actively increased.

For example, in a case in which condensed water is stored in the condensed water storage part 30 until the condensed water storage part 30 is filled with the condensed water, and then all of the stored condensed water is discharged from the condensed water storage part 30, the operating interval of the drainage pump 20 may be increased.

In this case, however, the sensing cycle at step S40 may be decreased in order to prevent the overflow of condensed water.

In a case in which the amount of condensed water (CV) that is generated per unit time is greater than the reference value (SV), therefore, it may be determined that the humidity of the room air is high, and the sensing cycle in which the condensed water is sensed may be decreased in order to prevent the overflow of the condensed water.

In a case in which condensed water is stored in the condensed water storage part 30 until the condensed water storage part 30 is almost filled with the condensed water, and then the drainage pump 20 is operated, the operating interval of the drainage pump 20 may be increased.

In a case in which the operating interval of the drainage pump 20 is increased, operating noise is decreased.

The other constructions of this embodiment are identical to those of the second or third embodiment, and therefore a detailed description thereof will be omitted.

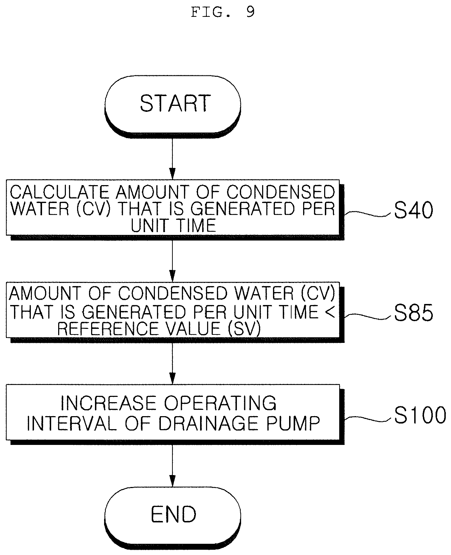

FIG. 9 is a flowchart showing a method of controlling an air conditioner according to a fifth embodiment of the present invention.

In the method of controlling the air conditioner according to this embodiment, the operating interval of the drainage pump 20 is adjusted when the room humidity is low, unlike the fourth embodiment.

The method of controlling the air conditioner according to this embodiment includes a step of sensing the increase in the level of condensed water during a predetermined time and calculating the amount of condensed water (CV) that is generated per unit time based thereupon (S40), a step of comparing the amount of condensed water (CV) that is generated per unit time with a reference value (SV) (S85), and a step of, upon determining that the amount of condensed water (CV) that is generated per unit time is less than the reference value (SV), increasing the operating interval of the drainage pump 20 (S90).

In a case in which the operating interval of the drainage pump 20 is increased, operating noise may be decreased, and power consumption may be reduced.

The air conditioner is operated based on the surrounding environment. For this reason, if the air conditioner is not set differently based on the humidity and temperature of a place where the air conditioner is to be installed at the time of delivery from a factory, the user's satisfaction may be lowered.

In the method of controlling the air conditioner according to this embodiment, it is possible to adjust the operating interval of the drainage pump 20 based on conditions, such as humidity and temperature, of the surrounding environment.

The other constructions of this embodiment are identical to those of the fourth embodiment, and therefore a detailed description thereof will be omitted.

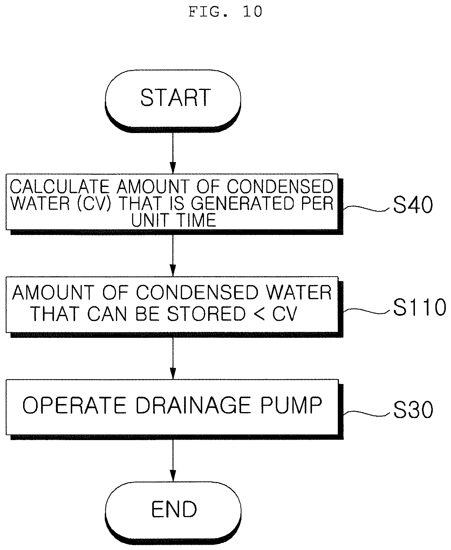

FIG. 10 is a flowchart showing a method of controlling an air conditioner according to a sixth embodiment of the present invention.

In the method of controlling the air conditioner according to this embodiment, the amount of condensed water (CV) that is generated per unit time is adjusted in order to prevent the overflow of the condensed water.

The method of controlling the air conditioner according to this embodiment includes a step of sensing the increase in the level of condensed water during a predetermined time and calculating the amount of condensed water (CV) that is generated per unit time based thereupon (S40), a step of comparing the amount of condensed water that is generated per unit time with the amount of condensed water that can be stored (S110), and a step of, upon determining that the amount of condensed water that is generated per unit time is greater than the amount of condensed water that can be stored, operating the drainage pump 20 (S30).

The amount of condensed water that can be stored may be calculated by subtracting the current water level from the maximum water level. The amount of condensed water that can be stored may be calculated since the electrode pads are installed, as in this embodiment.

Determining at step S110 that the amount of condensed water that can be stored is less than the amount of condensed water that is generated per unit time, the drainage pump 20 is operated in order to prevent the overflow of the condensed water.

In this embodiment, the condensed water storage part 30 is utilized to the maximum in order to minimize the operation of the drainage pump 20, thereby reducing operating noise and power consumption.

The steps of calculating the amount of condensed water that can be stored and controlling the drainage pump 20 based thereupon are executed only during the operation of the air conditioner. When the operation of the air conditioner is finished, the drainage pump 20 is operated to drain all of the condensed water stored in the condensed water storage part.

The other constructions of this embodiment are identical to those of the second embodiment, and therefore a detailed description thereof will be omitted.

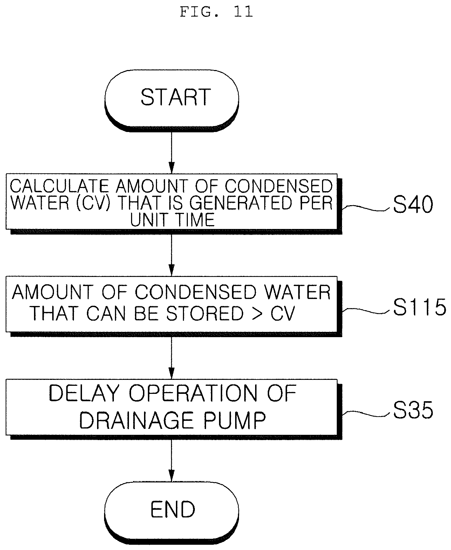

FIG. 11 is a flowchart showing a method of controlling an air conditioner according to a seventh embodiment of the present invention.

In the method of controlling the air conditioner according to this embodiment, the drainage pump is controlled such that the operation of the drainage pump is delayed in a case in which the amount of condensed water that can be stored is sufficient, unlike the sixth embodiment.

The method of controlling the air conditioner according to this embodiment includes a step of comparing the amount of condensed water that can be stored with the amount of condensed water (CV) that is generated per unit time (S115), and a step of, upon determining that the amount of condensed water that can be stored is greater than the amount of condensed water (CV) that is generated per unit time, delaying the operation of the drainage pump 20 (S35).

In a case in which the operation of the drainage pump 20 is delayed, it is possible to maximally fill the condensed water storage part 30 with condensed water.

After as large an amount of condensed water as possible is stored in the condensed water storage part 30, the drainage pump 20 may be operated. In this case, it is possible to reduce operating noise and power consumption.

The other constructions of this embodiment are identical to those of the sixth embodiment, and therefore a detailed description thereof will be omitted.

Although the first to seventh embodiments have been individually described for the convenience of understanding, the embodiments may be combined, or the components of the respective embodiments may be combined.

As is apparent from the above description, the air conditioner according to the present invention has one or more of the following effects.

First, it is possible for the water level detecting device to sense the capacitance of condensed water and to more accurately sense the level of the condensed water based on the sensed capacitance.

Second, it is possible to effectively control the drainage pump based on the accurately sensed level of the condensed water, thereby reducing operating noise and power consumption.

Third, it is possible to decide when the drainage pump will be operated based on the accurately sensed level of the condensed water.

Fourth, it is possible to early operate the drainage pump or to delay the operation of the drainage pump based on the accurately sensed level of the condensed water.

Fifth, it is possible to early operate the drainage pump or to delay the operation of the drainage pump based on the amount of condensed water that is generated per unit time.

Sixth, it is possible to increase or decrease the operating interval of the drainage pump based on the amount of condensed water that is generated per unit time.

Seventh, it is possible to increase the operating interval of the drainage pump in order to reduce operating noise and power consumption.

Eighth, it is possible to adjust the operating interval of the drainage pump based on the comparison between the amount of condensed water that is generated per unit time and a reference value.

Ninth, it is possible to compare the amount of condensed water that is generated per unit time with the amount of condensed water that can be stored in order to maximally store condensed water and then drain the stored condensed water.

It will be apparent that, although the preferred embodiments have been shown and described above, the present invention is not limited to the above-described specific embodiments, and various modifications and variations can be made by those skilled in the art without departing from the scope of the invention as defined by the appended claims.

## Claims

1. A method of controlling an air conditioner comprising a case (10) having a condensed water storage part (30) formed therein, a water level sensing housing (58) installed in the condensed water storage part in a state of contacting condensed water stored in the condensed water storage part, and a plurality of electrode pads (54) disposed in the water level sensing housing, in a state of not contacting the condensed water, for sensing capacitance of the condensed water, the method comprising:
sensing the capacitance of the condensed water through any one of the electrode pads to sense a level of the condensed water during cooling;
operating a drainage pump based on the level of the condensed water sensed through any one of the electrode pads to drain the condensed water stored in the condensed water storage part; the method being **characterized by**
sensing an increase in the level of condensed water during a predetermined time based on the level of the condensed water sensed at the sensing step and calculating an amount of condensed water that is generated per unit time based thereupon.

2. The method according to claim 1, further comprising, upon determining that the level of the condensed water deviates from an error range of a drainage level, returning to the sensing step.

3. The method according to claim 1 or 2, further comprising:
determining whether an operating condition of the drainage pump is satisfied based on the amount of condensed water that is generated per unit time calculated at the calculating step;
upon determining at the determining step that the operating condition of the drainage pump is satisfied, operating the drainage pump; and
upon determining at the determining step that the operating condition of the drainage pump is not satisfied, returning to the sensing step of sensing the level of the condensed water.

4. The method according to claim 3, wherein the operating condition of the drainage pump is decided based on a comparison between the amount of condensed water that is generated per unit time and an amount of condensed water that can be stored.

5. The method according to claim 3, wherein the operating condition of the drainage pump is decided based on a comparison between the amount of condensed water that is generated per unit time and a reference value stored in a controller.

6. The method according to claim 1 or 2, further comprising:
comparing the amount of condensed water that is generated per unit time with a reference value stored in a controller; and
upon determining that the amount of condensed water that is generated per unit time is greater than the reference value, decreasing an operating interval of the drainage pump.

7. The method according to claim 1 or 2, further comprising:
comparing the amount of condensed water that is generated per unit time with a reference value stored in a controller; and
upon determining that the amount of condensed water that is generated per unit time is less than the reference value, increasing an operating interval of the drainage pump.

8. The method according to claim 1 or 2, further comprising:
calculating an amount of condensed water that can be stored based on the level of condensed water stored in the condensed water storage part and comparing the amount of condensed water that is generated per unit time with the amount of condensed water that can be stored; and
upon determining at the comparing step that the amount of condensed water that is generated per unit time is greater than the amount of condensed water that can be stored, operating the drainage pump.

9. The method according to claim 1 or 2, further comprising:
calculating an amount of condensed water that can be stored based on the level of condensed water stored in the condensed water storage part and comparing the amount of condensed water that is generated per unit time with the amount of condensed water that can be stored; and
upon determining at the comparing step that the amount of condensed water that can be stored is greater than the amount of condensed water that is generated per unit time, delaying the operation of the drainage pump.

10. The method according to claim 1 or 2, further comprising:
determining whether a dehumidification recommendation condition is satisfied based on the amount of condensed water that is generated per unit time; and
upon determining that the dehumidification recommendation condition is satisfied, informing a user thereof.

11. The method according to claim 10, wherein the informing step comprises informing the user that the dehumidification recommendation condition is satisfied through a display unit or a remote controller of an indoor unit of the air conditioner or using sound output from the indoor unit of the air conditioner.

12. An air conditioner comprising:
a case (10) having a condensed water storage part (30) formed therein; and
a water level sensing device (50) installed in the condensed water storage part for sensing capacitance of condensed water stored in the condensed water storage part to sense a level of the condensed water, wherein
the water level sensing device (50) comprises:
a water level sensing housing (58) disposed in the condensed water storage part in a state of contacting the condensed water stored in the condensed water storage part;
a printed circuit board (52) disposed in the water level sensing housing; and
a plurality of electrode pads (54) disposed on the printed circuit board, in a state of not contacting the condensed water, for sensing the capacitance of the condensed water,
wherein the air conditioner is **characterized in** being configured to sense an increase in the level of condensed water during a predetermined time based on the level of the condensed water sensed by the water level sensing device and to calculate an amount of condensed water that is generated per unit time based thereupon.

13. The air conditioner according to claim 12, wherein
the case (10) is provided with a partition wall (16), which defines the condensed water storage part (30), and
a fixing part (59), fixed to the partition wall, is disposed at the water level sensing housing.

14. The air conditioner according to claim 12 or 13, wherein the water level sensing device (50) further comprises a connector (56) for electrically connecting the printed circuit board to a controller of the air conditioner.

## Patentansprüche

1. Verfahren zur Steuerung einer Klimaanlage, die aufweist: eine Verkleidung (10) mit einem darin gebildeten Kondenswasser-Speicherteil (30), ein Wasserstand-Erfassungsgehäuse (58), das im Kondenswasser-Speicherteil in einem Zustand eingebaut ist, in dem es Kondenswasser kontaktiert, das im Kondenswasser-Speicherteil gespeichert ist, und mehrere Elektrodenkontaktflächen (54), die im Wasserstand-Erfassungsgehäuse in einem Zustand angeordnet sind, in dem sie nicht das Kondenswasser kontaktieren, zum Erfassen der Kapazität des Kondenswassers, wobei das Verfahren aufweist:
Erfassen der Kapazität des Kondenswassers über eine der Elektrodenkontaktstellen, um einen Stand des Kondenswassers während der Kühlung zu erfassen;
Betreiben einer Entleerungspumpe auf der Grundlage des über eine der Elektrodenkontaktstellen erfassten Stands des Kondenswassers, um das Kondenswasser zu entleeren, das im Kondenswasser-Speicherteil gespeichert ist; wobei das Verfahren **gekennzeichnet ist durch**:
Erfassen eines Anstiegs des Kondenswasserstands während einer vorbestimmten Zeit auf der Grundlage des im Erfassungsschritt erfassten Stands des Kondenswassers und Berechnen einer Kondenswassermenge, die pro Zeiteinheit erzeugt wird, auf der Grundlage davon.

2. Verfahren nach Anspruch 1, das ferner aufweist: nach Bestimmen, dass der Stand des Kondenswassers von einem Fehlerbereich eines Entleerungsstands abweicht, erfolgendes Zurückkehren zum Erfassungsschritt.

3. Verfahren nach Anspruch 1 oder 2, das ferner aufweist:
Bestimmen, ob eine Betriebsbedingung der Entleerungspumpe erfüllt ist, auf der Grundlage der im Berechnungsschritt berechneten Kondenswassermenge, die pro Zeiteinheit erzeugt wird;
nach Bestimmen im Bestimmungsschritt, dass die Betriebsbedingung der Entleerungspumpe erfüllt ist, erfolgendes Betreiben der Entleerungspumpe; und
nach Bestimmen im Bestimmungsschritt, dass die Betriebsbedingung der Entleerungspumpe nicht erfüllt ist, erfolgendes Zurückkehren zum Erfassungsschritt des Erfassens des Stands des Kondenswassers.

4. Verfahren nach Anspruch 3, wobei über die Betriebsbedingung der Entleerungspumpe auf der Grundlage eines Vergleichs zwischen der Kondenswassermenge, die pro Zeiteinheit erzeugt wird, und einer Kondenswassermenge entschieden wird, die gespeichert werden kann.

5. Verfahren nach Anspruch 3, wobei über die Betriebsbedingung der Entleerungspumpe auf der Grundlage eines Vergleichs zwischen der Kondenswassermenge, die pro Zeiteinheit erzeugt wird, und einem Referenzwert entschieden wird, der in einem Controller gespeichert ist.

6. Verfahren nach Anspruch 1 oder 2, das ferner aufweist:
Vergleichen der Kondenswassermenge, die pro Zeiteinheit erzeugt wird, mit einem Referenzwert, der in einem Controller gespeichert ist; und
nach Bestimmen, dass die Kondenswassermenge, die pro Zeiteinheit erzeugt wird, größer als der Referenzwert ist, erfolgendes Verringern eines Betriebsintervalls der Entleerungspumpe.

7. Verfahren nach Anspruch 1 oder 2, das ferner aufweist:
Vergleichen der Kondenswassermenge, die pro Zeiteinheit erzeugt wird, mit einem Referenzwert, der in einem Controller gespeichert ist; und
nach Bestimmen, dass die Kondenswassermenge, die pro Zeiteinheit erzeugt wird, kleiner als der Referenzwert ist, erfolgendes Erhöhen eines Betriebsintervalls der Entleerungspumpe.

8. Verfahren nach Anspruch 1 oder 2, das ferner aufweist:
Berechnen einer Kondenswassermenge, die gespeichert werden kann, auf der Grundlage des Stands von Kondenswasser, das im Kondenswasser-Speicherteil gespeichert ist, und Vergleichen der Kondenswassermenge, die pro Zeiteinheit erzeugt wird, mit der Kondenswassermenge, die gespeichert werden kann; und
nach Bestimmen im Vergleichsschritt, dass die Kondenswassermenge, die pro Zeiteinheit erzeugt wird, größer als die Kondenswassermenge ist, die gespeichert werden kann, erfolgendes Betreiben der Entleerungspumpe.

9. Verfahren nach Anspruch 1 oder 2, das ferner aufweist:
Berechnen einer Kondenswassermenge, die gespeichert werden kann, auf der Grundlage des Stands von Kondenswasser, das im Kondenswasser-Speicherteil gespeichert ist, und Vergleichen der Kondenswassermenge, die pro Zeiteinheit erzeugt wird, mit der Kondenswassermenge, die gespeichert werden kann; und
nach Bestimmen im Vergleichsschritt, dass die Kondenswassermenge, die gespeichert werden kann, größer als die Kondenswassermenge ist, die pro Zeiteinheit erzeugt wird, erfolgendes Verzögern des Betriebs der Entleerungspumpe.

10. Verfahren nach Anspruch 1 oder 2, das ferner aufweist:
Bestimmen, ob eine Entfeuchtungsempfehlungsbedingung erfüllt ist, auf der Grundlage der Kondenswassermenge, die pro Zeiteinheit erzeugt wird; und
nach Bestimmen, dass die Entfeuchtungsempfehlungsbedingung erfüllt ist, erfolgendes Informieren eines Benutzers darüber.

11. Verfahren nach Anspruch 10, wobei der Informationsschritt aufweist: Informieren des Benutzers, dass die Entfeuchtungsempfehlungsbedingung erfüllt ist, über eine Anzeigeeinheit oder eine Fernbedienung einer Raumlufteinheit der Klimaanlage oder Verwenden einer akustischen Ausgabe von der Raumlufteinheit der Klimaanlage.

12. Klimaanlage, die aufweist:
eine Verkleidung (10) mit einem darin gebildeten Kondenswasser-Speicherteil (30); und
eine Wasserstand-Erfassungsvorrichtung (50), die im Kondenswasser-Speicherteil eingebaut ist, zum Erfassen der Kapazität von Kondenswasser, das im Kondenswasser-Speicherteil gespeichert ist, um einen Stand des Kondenswassers zu erfassen, wobei
die Wasserstand-Erfassungsvorrichtung (50) aufweist:
ein Wasserstand-Erfassungsgehäuse (58), das im Kondenswasser-Speicherteil in einem Zustand eingebaut ist, in dem es das Kondenswasser kontaktiert, das im Kondenswasser-Speicherteil gespeichert ist;
eine Leiterplatte (52), die im Wasserstand-Erfassungsgehäuse angeordnet ist; und
mehrere Elektrodenkontaktflächen (54), die auf der Leiterplatte in einem Zustand angeordnet sind, in dem sie nicht das Kondenswasser kontaktieren, zum Erfassen der Kapazität des Kondenswassers,
wobei die Klimaanlage **dadurch gekennzeichnet ist, dass** sie so konfiguriert ist, dass sie einen Anstieg des Kondenswasserstands während einer vorbestimmten Zeit auf der Grundlage des durch die Wasserstand-Erfassungsvorrichtung erfassten Stands des Kondenswassers erfasst und eine Kondenswassermenge, die pro Zeiteinheit erzeugt wird, auf der Grundlage davon berechnet.

13. Klimaanlage nach Anspruch 12, wobei
die Verkleidung (10) mit einer Trennwand (16) versehen ist, die das Kondenswasser-Speicherteil (30) bildet, und
ein Befestigungsteil (59), das an der Trennwand befestigt ist, am Wasserstand-Erfassungsgehäuse angeordnet ist.

14. Klimaanlage nach Anspruch 12 oder 13, wobei die Wasserstand-Erfassungsvorrichtung (50) ferner einen Verbinder (56) zum elektrischen Verbinden der Leiterplatte mit einem Controller der Klimaanlage aufweist.

## Revendications

1. Procédé de commande d'un climatiseur comprenant un carter (10) ayant une partie de stockage d'eau condensée (30) formée à l'intérieur de celui-ci, un boîtier de détection de niveau d'eau (58) installé dans la partie de stockage d'eau condensée dans un état en contact avec l'eau condensée stockée dans la partie de stockage d'eau condensée, et une pluralité de pastilles d'électrodes (54) disposées dans le boîtier de détection de niveau d'eau, dans un état sans contact avec l'eau condensée, pour détecter une capacité de l'eau condensée, le procédé comprenant :
la détection de la capacité de l'eau condensée par l'intermédiaire de l'une quelconque des pastilles d'électrodes pour détecter un niveau de l'eau condensée pendant le refroidissement ;
le fonctionnement d'une pompe de vidange sur la base du niveau de l'eau condensée détecté par l'intermédiaire de l'une quelconque des pastilles d'électrodes pour vidanger l'eau condensée stockée dans la partie de stockage d'eau condensée ;
le procédé étant **caractérisé par**
la détection d'une augmentation du niveau d'eau condensée pendant un temps prédéterminé sur la base du niveau de l'eau condensée détecté à l'étape de détection et le calcul d'une quantité d'eau condensée qui est générée par unité de temps sur la base de celle-ci.

2. Procédé selon la revendication 1, comprenant en outre, suite à la détermination selon laquelle le niveau de l'eau condensée s'écarte d'une plage d'erreur d'un niveau de vidange, le retour à l'étape de détection.

3. Procédé selon la revendication 1 ou 2, comprenant en outre :
le fait de déterminer si une condition de fonctionnement de la pompe de vidange est satisfaite sur la base de la quantité d'eau condensée qui est générée par unité de temps calculée à l'étape de calcul ;
suite à la détermination, à l'étape de détermination, selon laquelle la condition de fonctionnement de la pompe de vidange est satisfaite, le fonctionnement de la pompe de vidange ; et
suite à la détermination, à l'étape de détermination, selon laquelle la condition de fonctionnement de la pompe de vidange n'est pas satisfaite, le retour à l'étape de détection consistant à détecter le niveau de l'eau condensée.

4. Procédé selon la revendication 3, dans lequel la condition de fonctionnement de la pompe de vidange est décidée sur la base d'une comparaison entre la quantité d'eau condensée qui est générée par unité de temps et une quantité d'eau condensée qui peut être stockée.

5. Procédé selon la revendication 3, dans lequel la condition de fonctionnement de la pompe de vidange est décidée sur la base d'une comparaison entre la quantité d'eau condensée qui est générée par unité de temps et une valeur de référence mémorisée dans un organe de commande.

6. Procédé selon la revendication 1 ou 2, comprenant en outre :
la comparaison de la quantité d'eau condensée qui est générée par unité de temps à une valeur de référence mémorisée dans un organe de commande ; et
suite à la détermination selon laquelle la quantité d'eau condensée qui est générée par unité de temps est supérieure à la valeur de référence, la réduction d'un intervalle de fonctionnement de la pompe de vidange.

7. Procédé selon la revendication 1 ou 2, comprenant en outre :
la comparaison de la quantité d'eau condensée qui est générée par unité de temps à une valeur de référence mémorisée dans un organe de commande ; et
suite à la détermination selon laquelle la quantité d'eau condensée qui est générée par unité de temps est inférieure à la valeur de référence, l'augmentation d'un intervalle de fonctionnement de la pompe de vidange.

8. Procédé selon la revendication 1 ou 2, comprenant en outre :
le calcul d'une quantité d'eau condensée qui peut être stockée sur la base du niveau d'eau condensée stockée dans la partie de stockage d'eau condensée et la comparaison de la quantité d'eau condensée qui est générée par unité de temps à la quantité d'eau condensée qui peut être stockée ; et
suite à la détermination, à l'étape de comparaison, selon laquelle la quantité d'eau condensée qui est générée par unité de temps est supérieure à la quantité d'eau condensée qui peut être stockée, le fonctionnement de la pompe de vidange.

9. Procédé selon la revendication 1 ou 2, comprenant en outre :
le calcul d'une quantité d'eau condensée qui peut être stockée sur la base du niveau d'eau condensée stockée dans la partie de stockage d'eau condensée et la comparaison de la quantité d'eau condensée qui est générée par unité de temps à la quantité d'eau condensée qui peut être stockée : et
suite à la détermination, à l'étape de comparaison, selon laquelle la quantité d'eau condensée qui peut être stockée est supérieure à la quantité d'eau condensée qui est générée par unité de temps, le report du fonctionnement de la pompe de vidange.

10. Procédé selon la revendication 1 ou 2, comprenant en outre :
le fait de déterminer si une condition de recommandation de déshumidification est satisfaite sur la base de la quantité d'eau condensée qui est générée par unité de temps ; et
suite à la détermination selon laquelle la condition de recommandation de déshumidification est satisfaite, la notification de ceci à un utilisateur.

11. Procédé selon la revendication 10, dans lequel l'étape de notification comprend la notification, à l'utilisateur, que la condition de recommandation de déshumidification est satisfaite par l'intermédiaire d'une unité d'affichage ou d'une télécommande d'une unité intérieure du climatiseur ou l'utilisation d'une sortie sonore de l'unité intérieure du climatiseur.

12. Climatiseur comprenant :
un carter (10) ayant une partie de stockage d'eau condensée (30) formée à l'intérieur de celui-ci ; et
un dispositif de détection de niveau d'eau (50) installé dans la partie de stockage d'eau condensée pour la détection d'une capacité d'eau condensée stockée dans la partie de stockage d'eau condensée pour détecter un niveau de l'eau condensée, dans lequel
le dispositif de détection de niveau d'eau (50) comprend :
un boîtier de détection de niveau d'eau (58) disposé dans la partie de stockage d'eau condensée dans un état en contact avec l'eau condensée stockée dans la partie de stockage d'eau condensée ;
une carte de circuit imprimé (52) disposée dans le boîtier de détection de niveau d'eau ; et
une pluralité de pastilles d'électrodes (54) disposées sur la carte de circuit imprimé, dans un état sans contact avec l'eau condensée, pour la détection de la capacité de l'eau condensée,
dans lequel le climatiseur est **caractérisé en ce qu'**il est configuré pour détecter une augmentation du niveau d'eau condensée pendant un temps prédéterminé sur la base du niveau de l'eau condensée détecté par le dispositif de détection de niveau d'eau et pour calculer une quantité d'eau condensée qui est générée par unité de temps sur la base de celle-ci.

13. Climatiseur selon la revendication 12, dans lequel
le carter (10) est pourvu d'une paroi de séparation (16), qui définit la partie de stockage d'eau condensée (30), et
une partie de fixation (59), fixée à la paroi de séparation, est disposée au niveau du boîtier de détection de niveau d'eau.

14. Climatiseur selon la revendication 12 ou 13, dans lequel le dispositif de détection de niveau d'eau (50) comprend en outre un connecteur (56) pour la connexion électrique de la carte de circuit imprimé à un organe de commande du climatiseur.
